# EUROPEAN PATENT SPECIFICATION

(11) **EP 3 504 003 B1**
(45) Date of publication and mention of the grant of the patent: **25.01.2023**
(21) Application number: 17765501.6
(22) Date of filing: 22.08.2017
(51) Int. Cl.: B01L 3/00, G01N 21/03, C09J 183/04

(54) **SILICONE BASED PRESSURE SENSITIVE ADHESIVE TAPES**
SILIKONBASIERTE DRUCKEMPFINDLICHE KLEBEBÄNDER
RUBANS ADHÉSIFS SENSIBLES À LA PRESSION À BASE DE SILICONE

(30) Priority: 26.08.2016 US 201662379824 P
(43) Date of publication of application: 03.07.2019
(73) Proprietor: Avery Dennison Corporation, Mentor, OH 44060 (US)
(72) Inventor: HU, Xianbo, Pepper Pike Ohio 44124 (US)
(74) Representative: Müller-Boré & Partner Patentanwälte PartG mbB
(86) International application number: PCT/US2017/047938
(87) International publication number: WO 2018/039186

(56) References cited:
- EP-A2- 0 255 226
- WO-A1-00/65329
- WO-A1-00/68336
- DE-A1-102009 011 165

## Description

### FIELD

The present subject matter relates to silicone adhesive tapes, namely pressure sensitive adhesive tapes, which are particularly useful for medical, microbiology, and life science applications. The present subject matter also relates to systems and related methods for testing and/or evaluating liquid samples using the silicone adhesive tapes of the present subject matter.

### BACKGROUND

It is well known to subject biological samples to certain testing regimes to analyze and/or identify the sample. Test sample cards are described in the prior art which have a well or reaction site for receiving a fluid sample. Analysis of the liquid sample using light-based analytical methods may be detrimentally impacted by effects or differences in refractive index between the liquid sample contained on the card and air. Accordingly, a need exists for new techniques and products that avoid such effects and thereby promote the use of light-based analytical evaluations of liquid samples.

When performing polymerase chain reaction (PCR) techniques such as in evaluating trace amounts of a biological sample, care must be taken to avoid contamination of the sample. Contamination can occur from exposure to a wide array of agents, including certain agents used in adhesives. Thus, test sample cards or other testing media must be engineered to avoid such agents. Although satisfactory in certain regards, improved test media are needed which would facilitate polymerase chain reaction (PCR) techniques.
In this context, WO 00/068336 A1 describes silicone adhesives, methods and related articles. Moreover, DE 10 2009 011165 A1 describes an adhesive material. Moreover, EP 0 255 226 A2 describes silicone pressure-sensitive adhesives having improved properties and WO 00/065329 A1 describes a disposable optical cuvette cartridge.

### SUMMARY

The difficulties and drawbacks associated with previous approaches are addressed in the present subject matter as follows.

In one aspect, the present subject matter provides a silicone adhesive tape comprising a flexible substrate defining a first face and an oppositely directed second face. The silicone adhesive tape also comprises a catalyst free silicone pressure sensitive adhesive disposed on at least one of the first face and the second face of the substrate, wherein the silicone pressure sensitive adhesive includes at least one silicone gum and at least one siloxane resin. The silicone adhesive tape exhibits (i) a static shear from about 5 to about 5,000 minutes, (ii) a 180-degree peel adhesion greater than about 8.0 N/25 mm (1.80 Ibslinch), (iii) a low, stable liner release force of less than 60g/50.8 mm (as described herein), and (iv) a visible light transmittance of at least about 90%.

In another aspect, the present subject matter provides a method for evaluating a liquid sample such as water. The method comprises providing a fixture defining a first face, an oppositely directed second face, and an opening (also referred to as a window) extending through the thickness of the fixture between the first and second faces. The method also comprises providing a silicone adhesive tape including a flexible substrate and a catalyst free silicone pressure sensitive adhesive disposed on the substrate, wherein the silicone pressure sensitive adhesive includes at least one silicone gum and at least one siloxane resin. The silicone adhesive tape exhibits a visible light transmittance of at least 90%. The method also comprises forming a cavity (also referred to as a chamber) defined by the opening extending through the thickness of the fixture by adhering the silicone adhesive tape on a first face of the fixture covering the opening and adhering the silicone adhesive tape on a second face of the fixture covering the opening. The method additionally comprises administering a liquid sample into the cavity or chamber. And, the method comprises subjecting the liquid sample in the cavity or chamber to at least one analytical evaluation technique.

In still another aspect, the present subject matter provides a system for evaluating a liquid sample. The system comprises a fixture defining a first face, an oppositely directed second face, and an opening extending through the thickness of the fixture between the first and second faces. The system also comprises silicone adhesive tape including a flexible substrate and a catalyst free silicone pressure sensitive adhesive disposed on the substrate, wherein the silicone pressure sensitive adhesive includes at least one silicone gum and at least one siloxane resin. The silicone adhesive tape exhibits a visible light transmittance of at least about 90%.

As will be realized, the subject matter described herein is capable of other and different embodiments and its several details are capable of modifications in various respects, all without departing from the claimed subject matter. Accordingly, the drawings and description are to be regarded as illustrative and not restrictive.

### BRIEF DESCRIPTION OF THE DRAWINGS

Figure 1 is a schematic cross section of a silicone adhesive tape in accordance with an embodiment of the present subject matter.
Figure 2 schematically illustrates a cross section of another silicone adhesive tape in accordance with the present subject matter.
Figure 3 is a perspective schematic view of a testing fixture used with tape of the present subject matter in evaluating liquid samples in accordance with the present subject matter.
Figure 4 is a schematic cross section of the fixture of Figure 3 having silicone adhesive tape sections adhered to its faces.
Figure 5 illustrates UV-Vis light transmission curves of Sample 3 in air and deionized water at different soaking times.
Figure 6 is a graph of light transmission at 660 nm wavelength versus deionized water soaking time of Sample 3.
Figure 7 is a graph of light transmission at 660 nm wavelength versus deionized water soaking time of Sample 3 with 20-200 ppm NaCl.
Figure 8 illustrates UV-Vis light transmission curves of Sample 6 in air and deionized water at different soaking times.
Figure 9 is a graph of light transmission at 660 nm wavelength versus deionized water soaking time of Sample 6.
Figure 10 is a graph of light transmission at 660 nm wavelength versus deionized water soaking time of Sample 18.
Figure 11 is a graph of static shear at 70° C of Sample 3 on PET film and Sample 12.
Figure 12 is Breakaway Peak force and Liner Release Force versus aging time at 50°C for Sample 7 on a 50.8 µm (2 mil) BOPP film.
Figure 13 is Peel Adhesion on Stainless Steel (SS) and PS versus Aging time at 50°C for Sample 7 on a 50.8 µm (2 mil) BOPP film.
Figure 14 is the light transmission rate and clarity versus Aging time at 50oC for Sample 7 on a 50.8 µm (2 mil) BOPP film.
Figure 15 is the breakaway peak force versus Aging time at 50°C for Sample 12 on a 25.4 µm (1 mil) BOPP and a 50.8 µm (2 mil) PMP film.
Figure 16 is the peel adhesion on PS versus Aging time at 50°C for Sample 12 on a 25.4 µm (1 mil) BOPP and a 50.8 µm (2 mil) PMP film.

### DETAILED DESCRIPTION OF THE EMBODIMENTS

The present subject matter provides silicone adhesive tapes, namely silicone based pressure sensitive adhesive (PSA) tapes, that exhibit relatively high optical clarity, high light transmission and/or low haze; and other specific physical properties to meet processing and application requirements for a variety of medical, microbiology, and life science applications. In particular, the silicone adhesive tapes satisfy processing and application requirements for microorganism identification, microorganism susceptibility testing, and/or PCR technology for amplifying a single copy or a few copies of a portion of DNA across several orders of magnitude, generating thousands to millions of copies of a particular DNA sequence. The silicone adhesive tapes of the present subject matter generally comprise silicone based pressure sensitive adhesive disposed on a flexible substrate. The present subject matter also provides systems and methods for testing and/or evaluating liquid samples using the silicone adhesive tapes.

### Adhesives

Silicone based pressure sensitive adhesives (PSAs), also referred to herein as "silicone PSAs," primarily comprise: (i) at least one flexible, elastic silicone gum (also referred to herein as the "polymer"); and (ii) at least one siloxane resin (also referred to herein as the "resin"). In many embodiments, the silicone gum is a high molecular weight. In many embodiments, the silicone gum is a methyl based or a phenyl modified siloxane polymer. In many embodiments, the silicone gum may comprise at least one agent selected from: (i) polydimethylsiloxane (PDMS) having at least one silanol group, (ii) polydimethylsiloxane (PDMS) with no silanol groups, (iii) polydimethyldiphenyl siloxane (PDMDPS) having at least one silanol group, (iv) polydimethyldiphenyl siloxane (PDMDPS) with no silanol groups, (v) PDMS having at least one siloxane resin, (vi) PDMDPS containing at least one siloxane resin, and (vii) combinations thereof. In some embodiments, the PDMS and PDMDPS may comprise a high molecular weight. Combinations of these siloxanes provided above, with or without other siloxanes, can also be used for the silicone gum. All molecular weights described above are weight average molecular weights (Mw).

In certain embodiments of the present subject matter, the silicone adhesives described herein comprise high weight average molecular weight (Mw) polymer. In some embodiments, the silicone based adhesives comprise high weight average molecular weight (Mw) phenyl based polymer.

Generally, the silicone gum or polymer component of the silicone PSA has a weight average molecular weight (Mw) within a range of from about 150,000 to about 2,000,000; in certain embodiments from about 250,000 to about 1,500,000; and particularly from about 350,000 to about 1,000,000. In many embodiments, the molecular weight distribution of the silicone PSA is within a range of from about 1.0 to about 2.0, and in certain embodiments from about 1.0 to about 1.5. It will be understood, however, that a silicone gum or polymer component with molecular weight and/or molecular weight distribution out of the above range can also be used.

In particular embodiments, one or more commercially available materials can be used for the silicone gum or polymer component in the adhesive formulation. Non-limiting examples include PSA 6574 available from Momentive Performance Materials; Dow Corning 7956, 7957, and 2013, available from Dow Corning; and KRT-009, KRT-002, and KRT-003 available from Shi-Etsu.

The "resin" component in the silicone PSA formulation may be a relatively hard, crystalline siloxane resin(s). The resin may comprise an "MQ resin," which generally may include a siloxane resin copolymer MQ, wherein M is R₃SiO_{1/2} and Q is quaternary SiO_{4/2} units. In many embodiments, R is a methyl group, i.e., -CH₃-. However, the present subject matter includes the use of other functional groups in addition to, and/or instead of, the noted methyl group for R. Additional details of each component of the silicone PSAs which can be used in the silicone adhesive tapes of the present subject matter are provided herein.

In certain embodiments, the silicone PSA may comprise one or more MQ resin(s) with or without end cap(s). Depending on the application, an end cap(s) may be used.

Generally, the resin component has a weight average molecular weight (Mw) within a range of from about 2,000 to about 50,000; in certain embodiments from about 3,000 to about 30,000; and particularly from about 4,000 to about 20,000. In many embodiments, the molecular weight distribution is within a range of from about 1.0 to about 3.0, and more particularly from about 1.5 to about 2.5. It will be understood, however, that at least one siloxane resin component with molecular weight and/or molecular weight distribution out of the above range can also be used.

In particular embodiments, one or more commercially available materials can be used for the resin component in the adhesive formulation. Non-limiting examples include SR9130 or SR 545 from Momentive Performance Materials; Dow Corning 2-7066 from Dow Corning; and KRT-974 from Shi-Etsu.

in certain embodiments, the silicone adhesives utilize a particular resin to polymer ratio to achieve specific physical properties such as static shear and peel adhesion (both described in the Examples) to meet particular device converting process/final application requirements. In many embodiments, the silicone gum in the silicone adhesives comprise from about 50% to about 99% (all percentages noted herein are percentages by weight unless noted otherwise), in certain embodiments from about 60% to about 90%, and more particularly from about 65% to about 85% of the polymer component. The silicone gum may comprise one or more silicone gums described in the percentages provided above. And in many embodiments, the siloxane resin in the silicone adhesives may comprise from about 1% to about 50%, in certain embodiments from about 10% to about 40%, and more particularly from about 15% to about 35% of the siloxane resin component. The siloxane resin may comprise one or more siloxane resins described in the percentages provided above. These polymer/resin ratios can be changed accordingly if the polymer component has a relatively high intrinsic resin content and/or phenyl component.

In certain embodiments, the silicone adhesives utilize particular resin(s) and/or resin agent(s) in the polymer that function as physical crosslinkers to provide a specific static shear when incorporated in the silicone adhesive tapes of the present subject matter. Representative values for the noted specific static shear are from about 5 to about 5,000 minutes, more particularly from about 10 to about 2,500 minutes, and most particularly from about 30 to about 1,000 minutes. Static shear is determined as noted herein in the description of the Examples.

In certain embodiments, the silicone adhesives may include high molecular weight polymer(s) having particular molecular weights to provide specific tack and 180-degree peel adhesion required for certain processing and application requirements. Representative values for the noted peel adhesion when the silicone adhesives are used in silicone adhesive tapes of the present subject matter are typically greater than about 8.0 N/25 mm (1.80 Ibs/inch), more particularly greater than about 9.8 N/25 mm (2.20 Ibs/inch), and in certain embodiments greater than about 11.1 N/25 mm (2.5 lbs/inch).

In certain embodiments, a phenyl based polymer is used in combination with specific resin/polymer ratios to provide the silicone PSA tape with good thermal stability to meet requirements for high temperatures potentially encountered in the production of the silicone adhesive tape and/or the application of the silicone adhesive tape.

Since no chemical crosslinkers are needed in the silicone adhesives described herein to achieve one or more particular physical properties, no catalysts such as platinum, amino silanes, tin, rhodium, and/or peroxides are contained in the silicone PSA. These catalysts may be potential inhibitors for PCR application and toxic to microorganisms. Thus, according to the present invention, the silicone adhesives are "catalyst free".

Release liners may also be applied to the silicone adhesives described herein. Without using catalysts such as peroxides, platinum, etc., conventional silicone release liners can be used for the silicone adhesives described herein. The silicone release liners may be used instead of relatively costly fluorosilicone release liners in the coating of the silicone PSA tape. Further, other types of liners that may be used with the silicone adhesives described herein may include at least fluorinated liners.

In many embodiments, the silicone adhesives of the present subject matter meet the Dahlquist criteria, indicating their suitability as a pressure sensitive adhesive. According to what has come to be known as the Dahlquist criteria, to be a pressure sensitive adhesive, the formulation must have a plateau shear modulus at 25° C at 1 radian per second that is between about 1×10⁵ and about 6×10⁶ dynes/cm², particularly from about 1×10⁵ and about 3×10⁵ dynes/cm² (0.01 and 0.6 MPa, and 0.01 and 0.03 MPa, respectively) as determined by dynamic mechanical spectroscopy. A material stiffer than this, that is, a material that has a plateau shear modulus at 25° C of about 1×10⁷ dynes/cm² (1.0 MPa) will not exhibit surface tack at room temperature. A material less stiff than this, that is, a material that has a plateau shear modulus at 25° C of about 1×10⁴ dynes/cm² (0.001 MPa) will lack sufficient cohesive strength to be useful as a pressure sensitive adhesive.

Additional details of the silicone adhesives for use in the tapes are provided herein.

### Substrates or Films

The present subject matter tapes generally comprise a flexible substrate, and a silicone pressure sensitive adhesive disposed on the substrate. The silicone adhesive is typically in layer form, however the present subject matter includes the use of patterned and/or non-patterned regions of silicone adhesive disposed on the substrate.

A wide array of substrates or films can be used for the silicone adhesive tapes. Non-limiting examples of substrates or films include polypropylene (PP), polyethylene (PE), polyethylene terephthalate (PET) and other polyesters, polymethylpentene (PMP), nylon, cyclic olefin copolymers (COCs) and cyclic olefin polymers (COPs), or perfluoroalkoxy alkane polymer (PFA) with high optical clarity or low haze, low gel content and high production quality exhibited as free of black specks and foreign contamination can be used as carrier for the silicone PSA. Another nonlimiting substrate or film example is either one dimensionally oriented or biaxially oriented films mentioned above such as biaxially oriented polypropylene (BOPP) film. A variety of other facestock materials having sufficient clarity and transparency can be used for the substrate or film. Combinations of substrates or films can also be used. In many embodiments, a standard silicone release film is used to cover the silicone PSA after coating the silicone adhesive.

Although transparent substrates or films are used as examples for similar applications mentioned above, if no optical clarity is required, the silicone adhesive may be also coated on any other substrates or films such as, but not limited to, non-woven, paper, metal film, or foil.

### Tapes

As previously noted, the present subject matter provides a silicone adhesive tape with high, stable optical clarity, high light transmission, and/or low haze along with specific physical properties to meet the processing and application requirements for an array of medical and microbiology applications such as microorganism identification, microorganism susceptibility testing, and polymerase chain reaction (PCR) technology for amplifying a single copy or a few copies of a portion of DNA across several orders of magnitude, generating thousands to millions of copies of a particular DNA sequence. For these types of applications, a liquid medium is typically present which may include one or more reagents, antibiotics, nutrients, enzymes, DNA material, and/or microorganism(s). The silicone adhesive tape of the present subject matter provides relatively high light transmission, high clarity, and/or low haze not only at a dry state but also under a wet state. The extent of light transmission, low haze, and/or high clarity may not significantly change in the wet condition, which is significant for these types of applications. In addition, the silicone adhesive tape will not interact with or impact reagent(s), microorganisms(s), or DNA material and not interfere with testing due to properties and characteristics of the silicone adhesive tape.

The thickness of the adhesive layer of the silicone adhesive tape typically ranges from about 10 to about 100 microns, and in many embodiments from about 15 to about 70 microns. Expressed as adhesive coat weights, a coat weight of the silicone adhesive tape may be within a range of from about 15 grams/m² (gsm) to about 150 gsm for many applications. It will be understood, however, that the present subject matter includes laminates and/or tapes using thicknesses or coat weights greater than or lesser than these thicknesses for the adhesive layer.

The thickness of the substrate or film can be nearly any thickness appropriate for the intended application of the tape. For many embodiments, the thickness of the substrate or film is within a range of from about 12.7 µm (0.5 mils) to about 1.27 mm (50 mils), and more particularly from 25.4 µm (1 mil) to 127 µm (5 mils). However, it will be understood that the present subject matter includes silicone adhesive tapes having substrates or films having thicknesses greater than or lesser than these representative thicknesses.

In many embodiments, the silicone adhesive tapes utilize release liners which may include: (i) release layers that may be relatively thin and (ii) carriers for the release layers. For example, a typical release layer thickness is from about 1 to about 4 microns. In some embodiments, the thickness of the release layer is from about 1 to about 2 microns. The release layer(s) may at least partially cover the adhesive layer of the tape. In some embodiments, the release layer(s) may also fully cover the adhesive layer of the tape. The liner release force for the release liner(s) is low and stable with time, and the liner release force may be modified for a certain application. The liner release force for the release liner(s) is less than about 60 g/50.8 mm, or may be less than about 30 g/50.8 mm in order to provide a low liner release force for the applications. The release layer may be on a carrier such as a polymeric film or paper.

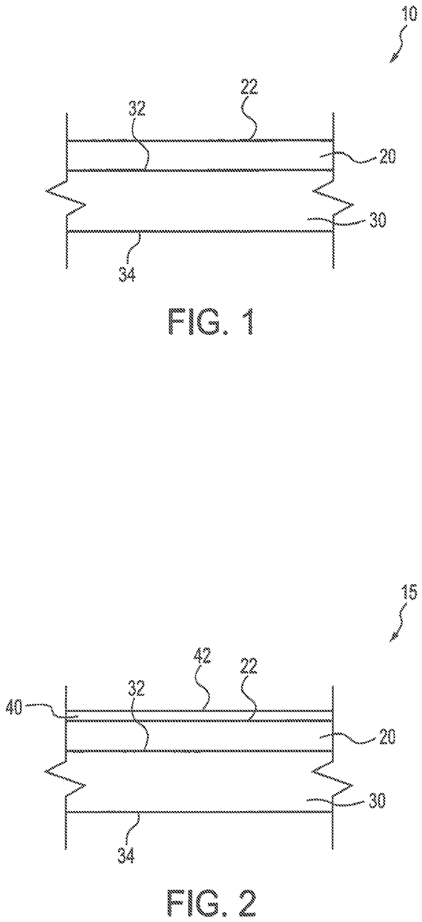

Figure 1 is a schematic cross sectional view of a silicone adhesive tape 10 in accordance with the present subject matter. The silicone adhesive tape 10 comprises a substrate or film 30 defining a first face 32 and an oppositely directed second face 34. The silicone adhesive tape 10 also comprises an adhesive layer (or region of adhesive) 20 disposed on the substrate or film 30 such as on the first face 32. The adhesive layer 20 defines an adhesive face 22.

Figure 2 is a schematic cross sectional view of another silicone adhesive tape 15 in accordance with the present subject matter. The silicone adhesive tape 15 comprises adhesive layer 20 disposed on a substrate or film 30 as previously described in association with Figure 1, and additionally comprises a release liner 40 disposed on the adhesive face 22. The liner 40 defines a liner face 42.

As noted, the silicone adhesive tapes of the present subject matter exhibits relatively high light transmission or clarity. According to the present invention, the silicone adhesive tapes as described herein exhibit a visible light transmittance or clarity of at least about 90%, more particularly at least about 92%, more particularly at least about 94%, and in certain versions, greater than about 96%. These light transmittance values are taken across the thickness of the silicone adhesive tape, through the adhesive layer and the substrate or film. Any release liner(s) are removed.

### Methods

The present subject matter also provides methods for measuring the extent of light transmission or clarity or haze of a liquid sample and more particularly of a biological sample, using the silicone adhesive tape. The method comprises providing a fixture defining a first face, an oppositely directed second face, and an opening (also referred to as a window) extending through the thickness of the fixture between the first and second faces. The method also comprises providing a silicone adhesive tape including a flexible substrate and a catalyst free silicone pressure sensitive adhesive disposed on the substrate, wherein the silicone pressure sensitive adhesive includes at least one silicone gum and at least one siloxane resin. The silicone adhesive tape exhibits a visible light transmittance of at least about 90%. The method also comprises forming a cavity (also referred to as a chamber) defined by the opening extending through the thickness of the fixture by adhering the silicone adhesive tape on a first face of the fixture covering the opening and adhering the silicone adhesive tape on a second face of the fixture covering the opening. The method additionally comprises administering a liquid sample into the cavity or chamber. And, the method comprises subjecting the liquid sample in the cavity or chamber to at least one analytical evaluation technique.

In many embodiments, the methods can be performed in a continuous manner with the face of the silicone adhesive tape contacting a liquid environment, and using a UV-Vis or haze meter to measure the clarity or haze. Clarity or haze may be measured in air or in a dry state. In the methods of the present subject matter, these properties can be measured in a wet state. The silicone adhesive tape contacts a liquid medium during application to a substrate or film. The methods of the present subject matter can mimic application condition(s) or a worst condition for the application. The methods of the present subject matter can provide a more accurate testing of haze or clarity or light transmission by excluding the effect of differences in refractive index between a medium such as a liquid medium like water or air. In many embodiments, the methods of the present subject matter are based upon measuring potential haze or clarity or light transmission change resulting from any potential effect from the medium to the silicone adhesive tape.

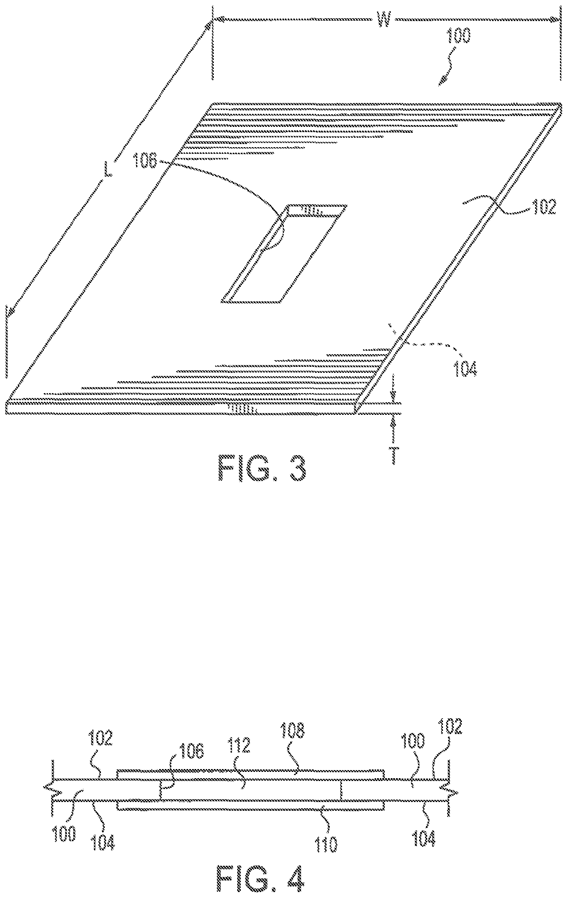

In order to evaluate the haze or clarity or light transmission with a medium, a fixture is provided as shown in Figure 3. The fixture 100 can be in the form of a metal plate or a relatively rigid member formed of an inert material such as certain polymers. The material for the fixture can be a low leachable metal such as stainless steel or a similar material. The fixture 100 includes or defines an opening 106 (also referred to as a window) in the center or an interior region of the fixture 100. The fixture 100 defines two oppositely directed faces 102 and 104. The opening 106 extends through the thickness of the fixture and between the two faces 102, 104. Both faces 102, 104 of the fixture are covered or at least partially covered with a silicone adhesive tape, and particularly a silicone adhesive comprising a silicone PSA of the present subject matter, as described herein. As shown in Figure 4, upon covering the opening 106 along the face 102 by adhering a section of silicone adhesive tape 108 thereto, and covering the opening 106 along the face 104 by adhering another section of silicone adhesive tape 110 thereto, a cavity 112 is formed within the opening 106 and between the silicone adhesive tape sections 108, 110.

The fixture 100 is shaped and/or sized so as to be suitable for use with a haze meter, a UV-Vis spectrophotometer instrument, and/or other analytical evaluation instrument as desired. In many embodiments, the fixture 100 is in the form of a flat or planar member such as a plate. Although not wishing to be limited to any particular size or dimensions, a useful size for the fixture 100 shown in Figure 3 is as follows. In one embodiment, the overall length L of the fixture 100 is about 76 mm, the overall width W of the fixture 100 is about 50 mm, and a typical thickness T of the fixture 100 is about 2.25 mm, where the opening 106 may have a length of about 28 mm and a width of about 10 mm.

The liquid medium is injected or otherwise administered into the cavity 112 or chamber formed by the silicone adhesive tape 108, 110 and fixture 100. It is also contemplated that one face 102 of the fixture 100 and opening 106 could be covered by silicone adhesive tape 108, 110, a liquid medium then administered into the opening 106 through the other open face, and then another tape applied on the opposite face of the fixture to cover the opening 106 and thereby enclose the liquid medium within the resulting cavity 112 or chamber. It is contemplated that a single section of tape or multiple sections of silicone adhesive tape could be used to cover the opening 106 and thereby form the noted cavity 112 or chamber. It is also contemplated that forming is performed by adhering a first section of silicone adhesive tape on the first face of the fixture and adhering a second section of silicone adhesive tape on the second face of the fixture.

The measurement of haze or clarity or light transmission through the cavity 112 or chamber can be performed at time 0, and at any time interval such as 15 minutes, 30 minutes, 1 hour, 2 hours, and up to a required test time period for a specific application. Automation for multiple samples can be performed using known techniques in the field if desired.

### Systems

The present subject matter also provides systems for testing and/or evaluating a liquid sample. The system comprises a fixture defining a first face, an oppositely directed second face, and an opening extending through the thickness of the fixture between the first and second faces. The system also comprises silicone adhesive tape including a flexible substrate and a catalyst free silicone pressure sensitive adhesive disposed on the substrate, wherein the silicone pressure sensitive adhesive includes at least one silicone gum and at least one siloxane resin. The silicone adhesive tape exhibits a visible light transmittance of at least about 90%.

The system for evaluating a liquid sample may include at least one silicone gum and at least one siloxane resin. In the system, the silicone gum may comprise at least one agent selected from: (i) polydimethylsiloxane (PDMS) having at least one silanol group, (ii) polydimethylsiloxane (PDMS) with no silanol groups, (iii) polydimethyldiphenyl siloxane (PDMDPS) having at least one silanol group, (iv) polydimethyldiphenyl siloxane (PDMDPS) with no silanol groups, (v) PDMS having at least one siloxane resin, (vi) PDMDPS containing at least one siloxane resin, and (vii) combinations thereof. In some embodiments, the PDMS and PDMDPS may comprise a high molecular weight. Combinations of these siloxanes provided above, with or without other siloxanes, can also be used for the silicone gum. In the system, the silicone gum may have a weight average molecular weight in a range of from about 150,000 to about 2,000,000. In the system, at least one siloxane resin may have a formula MQ, wherein M is R₃SiO_{1/2}, Q is quaternary SiO_{4/2} units, and R is -CH₃-. Further, the siloxane resin may have a weight average molecular weight in a range of from about 2,000 to about 50,000. The siloxane resin may comprise one or more siloxane resins described in the weight average molecular weight ranges provided above.

In the system, at least one silicone gum may be present within a range of from about 50% to about 99% based upon the total weight of the silicone pressure sensitive adhesive. In the system, the siloxane resin component (which may include more than one siloxane resin) may be present within a range of from about 1% to about 50% based upon the total weight of the silicone pressure sensitive adhesive. Further, the silicone pressure sensitive adhesive may be catalyst free.

In the system, the flexible substrate may be selected from the group comprising polypropylene, polyethylene, polyethylene terephthalate and other polyesters, COCs or COPs, polymethylpentene, nylon, perfluoroalkoxy alkane polymer, and combinations thereof. In some embodiments, the silicone pressure sensitive adhesive may be disposed on the flexible substrate in a layer having a thickness within a range from about 10 to about 100 microns. In some embodiments, the flexible substrate has a thickness within a range of from about 12.7 µm (0.5 mils) to about 1.27 mm (50 mils). According to the present invention, the silicone adhesive tape exhibits (i) a static shear from about 5 to about 5,000 minutes, and (ii) a peel adhesion greater than about 8.0 N/25 mm (1.80 lbs/inch).

### Examples

Investigations were performed to evaluate various properties and characteristics of silicone adhesive tapes in accordance with the present subject matter.

Silicone adhesive tape samples 1-23 were made using materials noted in Table 1 and prepared as set forth in Tables 2-4. Various evaluations were performed using the silicone adhesive tape samples and results reported in Tables 2-4. The evaluations included 180-degree peel adhesion, static shear, liner release test, breakaway release test, and light transmission. Procedures and descriptions for these evaluations are as follows.

### Sample Preparation

The silicone adhesive tape samples were prepared as follows. The polymer and resin as noted in Table 1 were thoroughly mixed. The polymer and resin may be uniformly mixed within the samples. Proportions of each component are noted in Tables 2-4 for each Sample 1-23.

After blending, the mixed composition was degassed. Any air bubbles the may be removed or reduced from the polymer and resin. Air bubbles leftover from the blending may impact the quality of the silicone adhesive tape.

The resulting silicone PSA was then coated on a polymeric film release liner such as a 50.8 µm (2 mil) PET liner with a coating weight as described herein.

The coated samples were conditioned for about 10 minutes prior to drying. The coated polymeric release liner was then dried at about 105° C to about 180° C for about 5 to about 15 minutes in an oven. After drying, the silicone adhesive tapes comprising the coated release liners were cooled to ambient temperature.

The coating weight and residual solvent of the silicone adhesive tape were then measured.

Once the coating weight and residual solvent met the application or use requirement(s), the coated PET release liners were then laminated to a facestock material such as 2 mil PET film or a BOPP film with a 2 kg roller or using a benchtop laminator and the silicone adhesive tape samples were subjected to testing or other evaluations as described herein.

Similar process is applied to the coating of the silicone PSA on a commercial solvent coater.

### 180 or 90 Degree Peel Adhesion

Samples with release liners were prepared as described below using ASTM D-3330. The samples were conditioned uncut for 24 hours at ambient conditions (about 23° C ± 2° C (73.4° F ± 3.6° F) at about 50% RH ± 5% RH where RH is relative humidity).

After conditioning, samples were die cut in a machine direction to form samples 2.54 cm by 20.32 cm (1 inch by 8 inches).

Using a tensile tester, such as an Instron Tensile Tester, a crosshead speed of 30.48 cm ± 1.27 cm (12 inches ± 0.5 inch) per minute was used.

During testing, the silicone adhesive tapes are applied to test panels. The test panels may be comprised of polystyrene (PS), polycarbonate (PC), and stainless steel. Prior to testing, the test panels were cleaned with isopropanol.

Release liners were peeled approximately 10.16 cm (4 inches) from an end of each sample, while avoiding contact with silicone adhesive or test panel.

The exposed silicone adhesive face of a sample was then contacted with the test panel. The sample was generally centered relative to the test panel and oriented parallel along the length of the test panel.

A roller was then lightly applied along the length of the sample at a rate of 30.48 cm (12 inches) per minute, applying no pressure on the sample other than the roller weight, i.e., 2 kg (4.5 pounds). If using an automatic rolldown machine, the sample is rolled once in each direction. If using a hand roller, the sample is rolled five (5) times in each direction. If air bubbles are entrapped, the sample is discarded and a new adhered sample is prepared.

After adhering the sample(s), the sample was subjected to a dwell period for one (1) minute at ambient conditions described above prior to testing.

The sample was then affixed within the tester.

The test was then performed. Average peel adhesion values were recorded, excluding values obtained during a first and a last 1.27 cm (0.5 inch) of peel.

### Static Shear

Samples to be evaluated for static shear were conditioned as previously described in association with Peel Adhesion testing.

Conditioned samples were then die cut in a machine direction to a size of 2.54 cm by 10.16 cm (1 inch by 4 inches).

Test panels, typically stainless steel, were obtained and may be cleaned with acetone or toluene, and then after two minutes, a final wash of heptane was performed.

The release liner was peeled from an end of the sample, while avoiding contact with silicone adhesive or panel.

The exposed adhesive area of the sample was contacted with a center region of the test panel, so that the sample hung vertically and the contact area was 2.54 cm by 2.54 cm (1 inch by 1 inch).

The adhered portion of the sample was rolled as previously described in association with the Peel Adhesion.

Adhered sample(s) were then dwelled for 5 minutes at ambient conditions.

The test panel and sample(s) were placed in a 70° C oven, such that the sample hung vertically from the panel.

A 1.0 kg weight was then suspended from the hanging end of the sample and a timer started.

Time was measured until the sample was pulled from the test panel as a result of the weight. Elapsed time was recorded.

### 90-degree Liner Release Test (ASTM D5375/D5375M) and Breakaway Release

Uncut samples were conditioned for 24 hours at ambient conditions about 23° C ± 2° C (73.4° F ± 3.6° F) at about 50% RH ± 5% RH where RH is relative humidity).

Samples were then die cut in a machine direction to a size of 2.54 cm by 20.33 cm (1 inch by 8 inches).

Crosshead speed of a tensile testing machine was set at 50.8 cm ± 1.27 cm (20 inches ± 0.5 inch) per minute. The load scale was set at 500 g.

The liner from a sample was peeled 5.08 cm (2 inches) from one end of the sample.

The free end of the peeled liner was inserted into the upper jaw of the tensile tester, while ensuring that both jaws and the sample were aligned.

Before testing, a dwell period of 15 seconds was observed.

The liner was then pulled to removal by the tester and the release force (also referred to as Break Away release force) was noted. Breakaway Force Average is the average the force required to maintain the separation of release liner and the adhesive. Breakaway peak force is the force required to initiate the separation of the liner and the adhesive. Breakaway peak force may be less than 90 g/25 mm in order to provide a low breakaway peak force for the applications, and in some embodiments, the breakaway peak force may be less than 65 g/ 25 mm for the applications.

For 90-degree liner release force, 5.08 cm by 20.33 cm (2 inches × 8 inches) samples are cut and test is done at 90 degree at a speed of 762 cm/minute (300 inches/minute) on a standard TLMI tester and the average force is recorded. Liner release is less than 60 g/50.8 mm in order to provide a low release force for the applications, and in some embodiments, the liner release force may be less than 30 g/ 50.8 mm for the applications.

### Light Transmission

Light transmission, optical clarity, and/or haze were measured by ASTM D1003 Standard Test Method for Haze and Luminous Transmittance of Transparent Plastics.

Suitable instruments for measuring light transmission include a BYK Haze Meter.

Light transmission rate was also measured using a UV-Vis spectrometer.

**Table 1 - Materials Used for Adhesive in Tape Samples 1-23**

| Material | Description | Supplier |
|---|---|---|
| PSA 6574 | Silicone polymer | Momentive Performance Materials |
| SR9130 | Silicone resin | Momentive Performance Materials |
| Dow Corning 7956 | Silicone polymer | Dow Corning |
| Dow Corning 2-7066 | Silicone resin | Dow Corning |
| Dow Corning 7657 | Silicone polymer | Dow Corning |
| Dow Corning 2013 | Silicone polymer | Dow Corning |
| Syl-Off 4000 | Catalyst | Dow Corning |
| KRT-009 | Silicone polymer | Shi-Etsu |
| KRT-974 | Silicone resin | Shi-Etsu |
| KRT-002 | Silicone polymer | Shi-Etsu |
| KRT-003 | Silicone polymer | Shi-Etsu |

**Table 2 - Tape Samples 1-4 and Results of Evaluations**

| Sample | Silicone Polymer | Silicone resin | Tape Configuration | | | | Tape Physical Properties | |
|---|---|---|---|---|---|---|---|---|
| | | | Polymer (% wt) | Resin (%wt) | Coating weight (gsm) | Liner | Peel Adhesion on PS | Static Shear at 70° C (minute) |
| 1 | PSA 6574 | SR9130 | 92.96 | 7.04 | 40 | Silicone Liner | 2.3 | 20.5 |
| 2 | PSA 6574 | SR9130 | 89.7 | 10.3 | 40 | Silicone Liner | 2.6 | 30.1 |
| 3 | PSA 6574 | SR9130 | 86.91 | 13.09 | 40 | Silicone Liner | 2.8 | 67.1 |
| 4 | PSA 6574 | SR9130 | 83.32 | 16.68 | 40 | Silicone Liner | 2.8 | 122.1 |

**Table 3 - Tape Samples 5-15 and Results of Evaluations**

| Sample | Silicone Polymer | Silicone Resin | Catalyst | Tape Configuration | | | | Tape Physical Properties | | |
|---|---|---|---|---|---|---|---|---|---|---|
| | | | | Polymer (% wt) | Resin (%wt) | Coating weight (gsm) | Liner | Peel Adhesion on PS or PP* | Adhesion on Stainless Steel | Static Shear at 70° C (minute) |
| 5 | Dow Corning 7956 | 2-7066 | NA | 85 | 15 | 60 | | 3.29* | 3.91 | 10.3 |
| 6 | Dow Corning 7956 | 2-7066 | NA | 80 | 20 | 62 | | 3.52* | 3.92 | 40.2 |
| 7 | Dow Corning 7956 | 2-7066 | NA | 75 | 25 | 60 | | 4.23" | 4.09 | 99 |
| 8 | Dow Corning 7956 | 2-7066 | NA | 70 | 30 | 58 | | 0.06* | 2.38 | 1003 |
| 9 | Dow Corning 7956 | 2-7066 | NA | 65 | 35 | 65 | silicone Liner | 0.03* | 1.17 | 1739 |
| 10 | Dow Corning 7956 | 2-7066 | NA | 60 | 40 | 59 | | 0* | 0.02 | * |
| 11 | Dow Corning 7957 | 2-7066 | NA | 80 | 20 | 47 | | 4.82 | NA | 49 |
| 12 | Dow Corning 7958 | 2-7066 | NA | 78 | 22 | 45 | | 3.8 | | 92 |
| 13 | Dow Corning 7959 | 2-7066 | NA | 75 | 25 | 40 | | 3.28 | | 296 |
| 14* | Dow Corning 7657 | NA | Syl-Off 4000 | 100 | 0 | 40 | Fluorosilicone Liner | 2.38 | | >150 |
| 15* | Dow Corning 2013 | NA | Syl-Off 4000 | 100 | 0 | 40 | | 1.78 | | >150 |

| | | | | | | | | | | |
|---|---|---|---|---|---|---|---|---|---|---|
| * comparative examples | | | | | | | | | | |

**Table 4 - Tape Samples 16-23 and Results of Evaluations**

| Sample | Silicone Polymer | Silicone Resin | Catalyst | Tape Configuration | | | | Tape Physical Properties | | | | |
|---|---|---|---|---|---|---|---|---|---|---|---|---|
| | | | | Polymer (% wt) | Resin (%wt) | Coating weight (gsm) | Liner | Peel Adhesion on PS or PC** | Adhesion on Stainless Steel | Static Shear at 70° C (minute) | Release force (g/in²) | Break Away Release force (g/in²) |
| 16* | KRT-009 | KRT-974 | NA | 100 | 0 | 48 | Silicone Liner | 3.29 | NA | 3.5 | NA | 256.7 |
| 17 | KRT-009 | KRT-974 | NA | 85 | 15 | 48 | | 3.51 | | 36.2 | | 16.9 |
| 18 | KRT-009 | KRT-974 | NA | 80 | 20 | 38 | | 4.11 | | 77.5 | | 13.5 |
| 19 | KRT-009 | KRT-974 | NA | 75 | 25 | 40 | | 2.14 | | 480.7 | | 4.0 |
| 20 | KRT-009 | KRT-974 | NA | 70 | 30 | 44 | | 0.05 | | 1871.8 | | 2.6 |
| 21* | KRT-009 | KRT-974 | BPO | 100 | 0 | 55 | Fluoroslllcone Liner | 3.1** | 3.2 | 59 | 1957 | NA |
| 22* | KRT-009 | KRT-974 | BPO | 100 | 5 | 55 | | 3.1** | 3.23 | 241 | 1260 | |
| 23* | KRT-009 | KRT-974 | BPO | 100 | 10 | 55 | | 3.4** | 3.58 | 332 | 22 | |

| | | | | | | | | | | | | |
|---|---|---|---|---|---|---|---|---|---|---|---|---|
| * comparative examples | | | | | | | | | | | | |

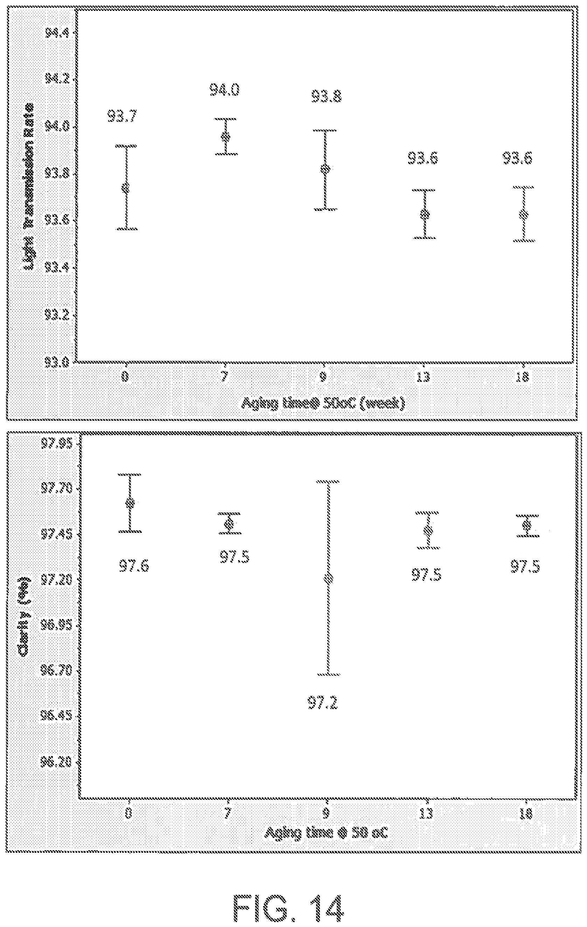

Samples 3 and 11 were subjected to haze testing using a BYK Haze Meter. Light transmission for Samples 3 and 11 were 94% and 91%, respectively. Sample 3 was also evaluated in an aqueous medium with 50-200 ppm of salts such as NaCl. The light transmission was 94%. Upon measuring these samples in air, there was no significant difference in light transmission. Light transmission did not change with time, such as 24 hours, one week, one month, or up to 18 weeks at 50°C for Sample 7 in Figure 14.

Analytical evaluation techniques for haze or light transmittance may be evaluated using a UV-Vis spectrometer.

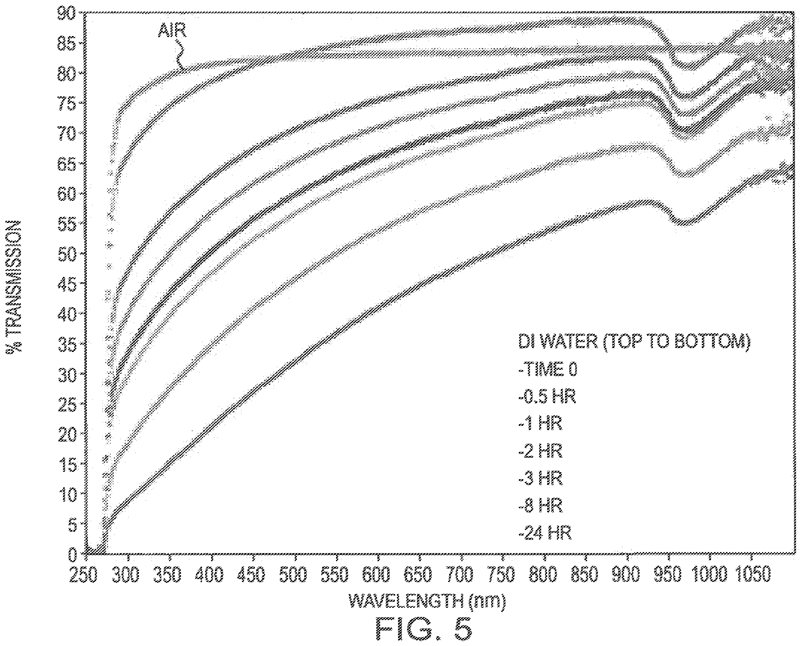

Typical UV-Vis light transmission curves in air and deionized (DI) water as a function of time for Sample 3 are shown in Figure 5.

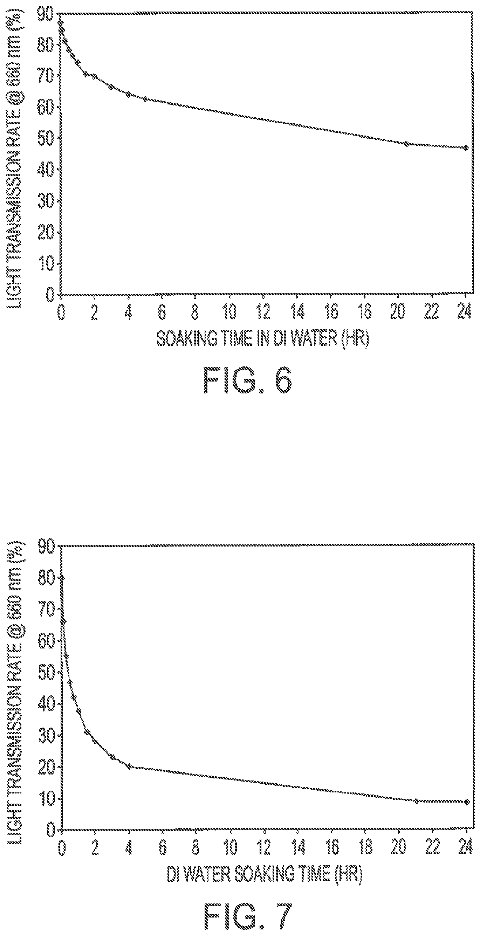

Light transmission in air is about 80% in visible light range. The light transmission or transmittance did not change with time over the testing time period. The light transmission of Sample 3 in deionized water varies with wavelength. For example, the light transmission increases with wavelength in the visible light range. This is different from the same tape measured in air. The light transmission also decreased dramatically with increase in soaking time in deionized water. For example, a 40% decrease in light transmission was observed after 24 hours of soaking in deionized water. Light transmission at a wavelength of 660 nm with soaking time is plotted in Figure 6 for quantitative comparison purpose. Also, the haze increased with decrease in light transmission. The difference was readily observed visually from pictures of tape soaked at specific times.

Typical UV-Vis light transmission curves in air and deionized water with time of Sample 3 with 20-200 ppm salts like NaCl are shown in Figure 7.

Light transmission in air is about 80% in visible light range. The light transmittance did not change with time during the testing time period. Compared to Sample 3, trace amount of salts such as NaCl can decrease the light transmission rate and increase the haze dramatically. The light transmission rate of Sample 3 with 20-200 ppm NaCl decreased about 40% after soaking in deionized water for only 1 hour. It took 24 hours of soaking in deionized water for Sample 3 to achieve about a 40% decrease in light transmission. The light transmission also decreased dramatically with increase in soaking time in deionized water. For example, about 40% decrease in light transmission occurred after 24 hours of soaking in deionized water. Also the haze increased dramatically with the dramatic decrease in light transmission and the difference was readily observed visually from pictures of tape soaked at specific time. This high haze makes this tape not suitable for many applications.

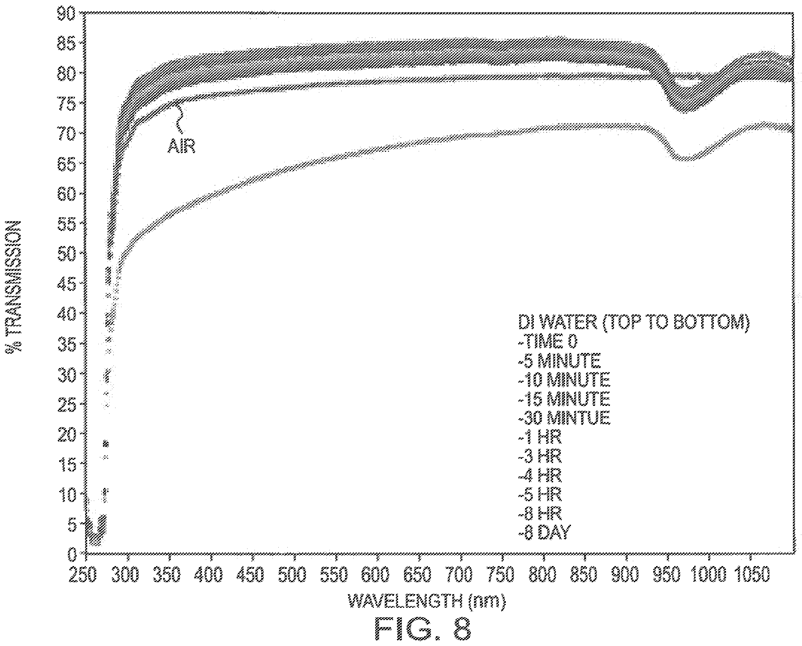

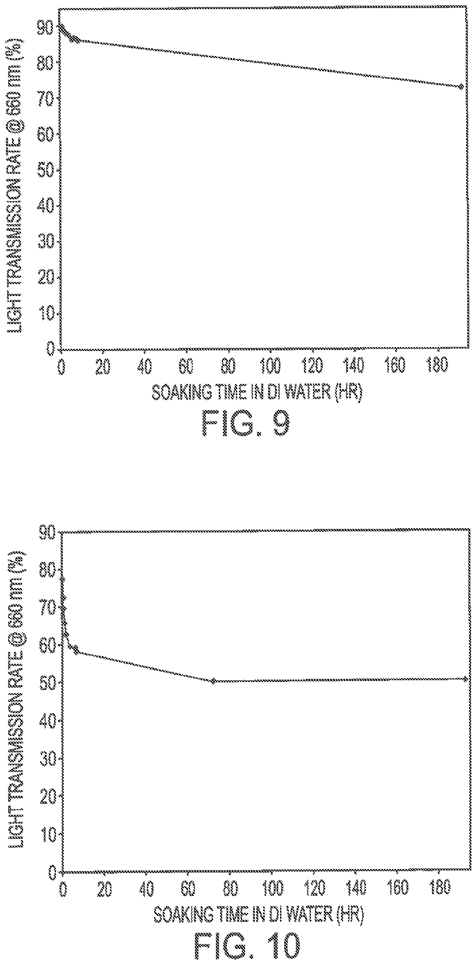

Typical UV-Vis light transmission curves in air and deionized water with time for Sample 6 are shown in Figure 8. Light transmission in air is about 83% in visible light range. Light transmittance did not change with time during the testing time period. The initial light transmission in water was 89.9% and higher than that in air. The light transmission of Sample 6 in deionized water still varies with wavelength. For example, the light transmission increased with wavelength in the visible light range. While the change of light transmission with wavelength is not as significant as Sample 3 and Sample 3 with salt; Sample 6 differentiates itself from other samples in its constant light transmission for short periods of time and only a slight decrease in light transmission for long periods of time. Light transmission at wavelength of 660 nm with soaking time is plotted in Figure 9 for quantitative comparison purpose. As shown in Figure 9, the decrease in light transmission after 8 hours soaking in deionized water was less than 4%. There was only about 17% drop in light transmission after 8 days of soaking in deionized water. Due to the slight drop in light transmission, the haze before and after 8 days of deionized water soaking is barely distinguished visually. This high light transmission in an aqueous system is significant for certain applications such as diagnostics and life sciences.

Typical UV-Vis light transmission curves in air and deionized water with time of Sample 18 are shown in Figure 10. Light transmission in air is about 68% in visible light range. The light transmittance did not change with time during the testing time period. The initial light transmission in water was 77% and higher than that in air. The decrease in light transmission of Sample 18 is similar to that of Sample 3. The final light transmission was higher than that of Sample 3.

In the static shear evaluations, static shear was measured over time.

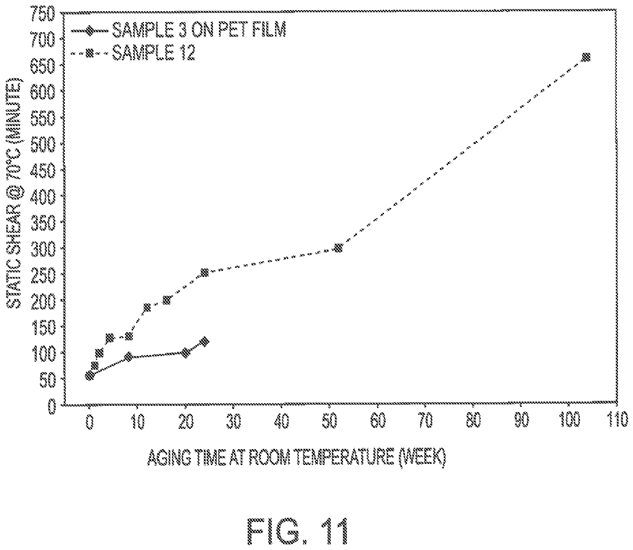

Static shear at 70° C for Sample 3 on a PET film and Sample 12 versus aging time at room temperature are shown in Figure 11. Static shear for both samples increased with time. But the static shear of Sample 12 increased at a much lower rate. For example, after 6 months of aging, the static shear was five times and two times that at time 0 for Sample 3 on PET and Sample 12, respectively. This fast increase in static shear can impact the shelf life of the tape due to either process issues and/or cause functional issues for certain applications, where static shear is critical.

In the liner release evaluations, breakaway release force and liner release force were measured over time.

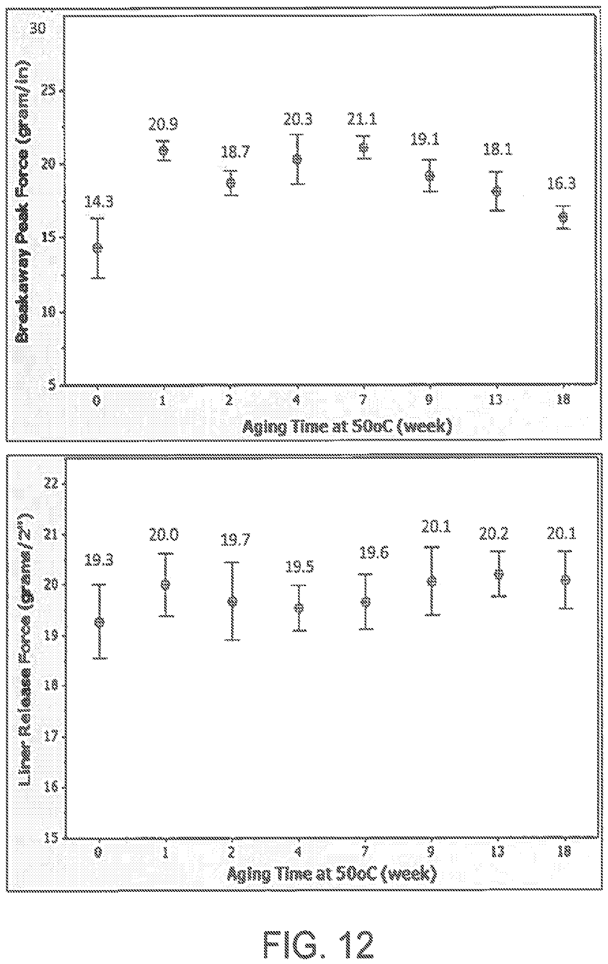

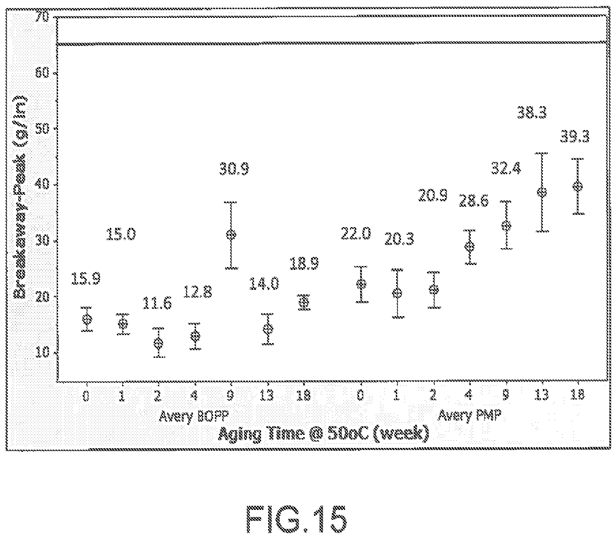

As shown in Figure 12, after aging at 50°C up to 18 weeks (which is thought to potentially equate to an equivalent to real time shelf life of about 4 years), the breakaway peak force and the 90-degree liner release force were very low and stable (as described herein), and below 25 grams/2.54 cm and 25 grams/5.08 cm (25 grams/in and 25 grams/2 in) respectively. The same trend was shown in Figure 15 for Sample 12 on a 25.4 µm (1 mil) BOPP and a 50.8 µm (2 mil) PMP film. Although non-fluorosilicone liner is used in these tape, the release force may be very low, and this may differentiate the tapes described herein from other silicone tapes in the field.

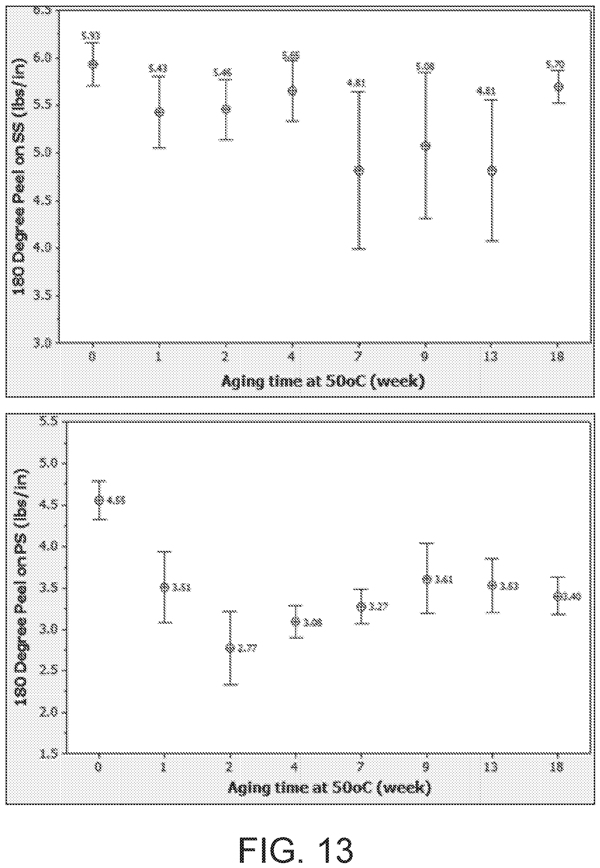

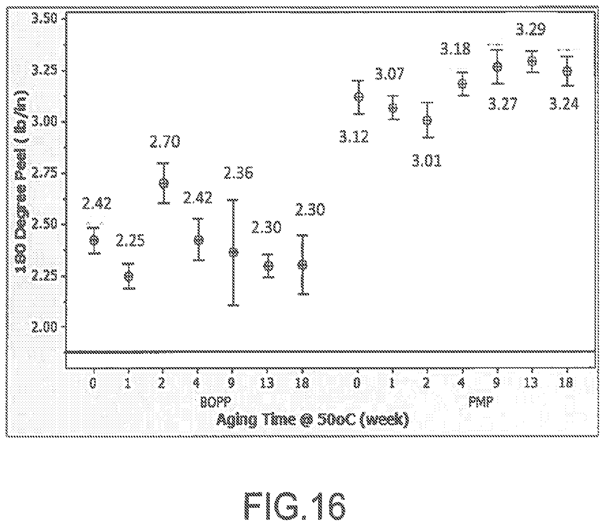

In the peel adhesion evaluations, peel adhesion on stainless steel (SS) and polystyrene (PS) were measured over time. As shown in Figure 13 and Figure 16, no significant change in peel adhesion on both SS and PS for tapes aged at 50°C up to 18 weeks. The tapes maintain their high adhesion with time.

Many other benefits will no doubt become apparent from future application and development of this technology.

The present subject matter includes all operable combinations of features and aspects described herein. Thus, for example if one feature is described in association with an embodiment and another feature is described in association with another embodiment, it will be understood that the present subject matter includes embodiments having a combination of these features.

## Claims

1. A silicone adhesive tape comprising:
a flexible substrate defining a first face and an oppositely directed second face;
a catalyst free silicone pressure sensitive adhesive disposed on at least one of the first face and the second face of the substrate, wherein the silicone pressure sensitive adhesive includes at least one silicone gum and at least one siloxane resin, and;
wherein the tape exhibits
(i) a static shear from 5 to 5,000 minutes, as measured in accordance with the method provided in the description,
(ii) a 180-degree peel adhesion greater than 8.0 N/25 mm, as measured in accordance with the method provided in the description,
(iii) a low, stable liner release force of less than 60g/50.8 mm, as measured in accordance with the method provided in the description, and
(iv) a visible light transmittance of at least 90%, as measured in accordance with the method provided in the description.

2. The tape of claim 1 further comprising:
a release layer at least partially covering the silicone pressure sensitive adhesive.

3. A method for evaluating a liquid sample, the method comprising:
providing a fixture defining a first face, an oppositely directed second face, and an opening extending through the thickness of the fixture between the first and second faces;
providing a silicone adhesive tape comprising a flexible substrate and a catalyst free silicone pressure sensitive adhesive disposed on the substrate, wherein the silicone pressure sensitive adhesive includes at least one silicone gum and at least one siloxane resin,
the silicone adhesive tape exhibiting a visible light transmittance of at least 90%;
forming a cavity defined by the opening extending through the thickness of the fixture by adhering the silicone adhesive tape on a first face of the fixture covering the opening and adhering the silicone adhesive tape on a second face of the fixture covering the opening;
administering a liquid sample into the cavity;
subjecting the liquid sample in the cavity to at least one analytical evaluation technique.

4. The method of claim 3 wherein the forming is performed by adhering a single section of tape on both faces of the fixture.

5. The method of claim 3 wherein the forming is performed by adhering a first section of silicone adhesive tape on the first face of the fixture and adhering a second section of silicone adhesive tape on the second face of the fixture.

6. The method of claim 3 wherein the analytical evaluation technique is performed using a spectrometer.

7. The method of claim 3 wherein the analytical evaluation technique is performed using a haze meter.

8. A system for evaluating a liquid sample, the system comprising:
a fixture defining a first face, an oppositely directed second face, and an opening extending through the thickness of the fixture between the first and second faces;
silicone adhesive tape including a flexible substrate and a catalyst free silicone pressure sensitive adhesive disposed on the substrate, wherein the silicone pressure sensitive adhesive includes at least one silicone gum and at least one siloxane resin and,
the tape exhibiting a visible light transmittance of at least 90%.

9. The silicone adhesive tape of claim 1 or the system of claim 8 wherein the silicone gum comprises at least one agent selected from: polydimethylsiloxane (PDMS) having at least one silanol group, polydimethylsiloxane (PDMS) with no silanol groups, polydimethyldiphenyl siloxane (PDMDPS) having at least one silanol group, polydimethyldiphenyl siloxane (PDMDPS) with no silanol groups, PDMS having at least one siloxane resin, PDMDPS containing at least one siloxane resin, and combinations thereof.

10. The silicone adhesive tape of claim 1 or the system of claim 8 wherein the silicone gum has a weight average molecular weight in a range of from 150,000 to 2,000,000.

11. The silicone adhesive tape of claim 1 or the system of claim 8 wherein the siloxane resin has a formula MQ, wherein M is R₃SiO_{1/2}, Q is quaternary SiO_{4/2} units, and R is -CH₃-.

12. The silicone adhesive tape of claim 1 or the system of claim 8 wherein the siloxane resin has a weight average molecular weight in a range of from 2,000 to 50,000.

13. The silicone adhesive tape of claim 1 or the system of claim 8 wherein the at least one silicone gum is present within a range of from 60% to 90% based upon the total weight of the silicone pressure sensitive adhesive.

14. The silicone adhesive tape of claim 1 or the system of claim 8 wherein the siloxane resin is present within a range of from 1% to 50% based upon the total weight of the silicone pressure sensitive adhesive.

15. The silicone adhesive tape of claim 1 or the system of claim 8 wherein the flexible substrate is selected from the group comprising polypropylene, polyethylene, polyethylene terephthalate and other polyesters, COCs or COPs, polymethylpentene, nylon, perfluoroalkoxy alkane polymer, and combinations thereof.

16. The silicone adhesive tape of claim 1 or the system of claim 8 wherein the silicone pressure sensitive adhesive is disposed on the flexible substrate in a layer having a thickness within a range from 10 to 100 microns.

## Patentansprüche

1. Silikonhaftband, umfassend:
ein flexibles Substrat, das eine erste Fläche und eine entgegengesetzt gerichtete zweite Fläche festlegt;
ein katalysatorfreies, druckempfindliches Silikonhaftmittel, das auf mindestens einer der ersten Fläche und der zweiten Fläche des Substrats angeordnet ist, wobei das druckempfindliche Silikonhaftmittel mindestens einen Silikonkautschuk und mindestens ein Siloxanharz einschließt; und
wobei das Band
(i) eine statische Scherung von 5 bis 5.000 Minuten, gemessen entsprechend dem Verfahren, das in der Beschreibung angegeben ist,
(ii) eine 180-Grad Schälhaftung von mehr als 8,0 N/25 mm, gemessen entsprechend dem Verfahren, das in der Beschreibung angegeben ist,
(iii) eine niedrige, stabile Trennpapier-Ablösekraft von weniger als 60 g/50,8 mm, gemessen entsprechend dem Verfahren, das in der Beschreibung angegeben ist, und
(iv) eine Durchlässigkeit von sichtbarem Licht von mindestens 90%, gemessen entsprechend dem Verfahren, das in der Beschreibung angegeben ist.,
aufweist.

2. Band nach Anspruch 1, weiter umfassend:
eine Ablöseschicht, die das druckempfindliche Silikonhaftmittel mindestens teilweise bedeckt.

3. Verfahren zum Auswerten einer flüssigen Probe, wobei das Verfahren umfasst:
Bereitstellen einer Befestigung, die eine erste Fläche, eine entgegengesetzt gerichtete zweite Fläche und eine Öffnung, die sich über die Dicke der Befestigung zwischen den ersten und zweiten Flächen erstreckt, festlegt;
Bereitstellen eines Silikonhaftbands, umfassend ein flexibles Substrat und ein katalysatorfreies, druckempfindliches Silikonhaftmittel, der auf dem Substrat angeordnet ist, wobei das druckempfindliche Silikonhaftmittel mindestens einen Silikonkautschuk und mindestens ein Siloxanharz einschließt,
wobei das Silikonhaftband eine Durchlässigkeit von sichtbarem Licht von mindestens 90% aufweist;
Bilden eines Hohlraums, der durch die Öffnung, die sich über die Dicke der Befestigung erstreckt, durch Haften des Silikonhaftbands, das die Öffnung bedeckt, auf eine erste Fläche der Befestigung und Haften des Silikonhaftbands, das die Öffnung bedeckt, auf eine zweite Fläche der Befestigung, festgelegt ist;
Einbringen einer flüssigen Probe in den Hohlraum;
Aussetzen der flüssigen Probe in dem Hohlraum mindestens einer analytischen Auswertetechnik.

4. Verfahren nach Anspruch 3, wobei das Bilden durch Haften eines einzelnen Bereichs des Bands auf beide Flächen der Befestigung ausgeführt wird.

5. Verfahren nach Anspruch 3, wobei das Bilden durch Haften eines ersten Bereichs des Silikonhaftbands auf die erste Fläche der Befestigung und Haften eines zweiten Bereichs des Silikonhaftbands auf die zweite Fläche der Befestigung ausgeführt wird.

6. Verfahren nach Anspruch 3, wobei die analytische Auswertetechnik unter Verwendung eines Spektrometers ausgeführt wird.

7. Verfahren nach Anspruch 3, wobei die analytische Auswertetechnik unter Verwendung eines Trübungsmessgeräts ausgeführt wird.

8. System zum Auswerten einer flüssigen Probe, wobei das System umfasst:
eine Befestigung, die eine erste Fläche, eine entgegengesetzt gerichtete zweite Fläche und eine Öffnung, die sich über die Dicke der Befestigung zwischen den ersten und zweiten Flächen erstreckt, festlegt;
Silikonhaftband, welches ein flexibles Substrat und ein auf dem Substrat angeordnetes katalysatorfreies, druckempfindliches Silikonhaftmittel einschließt, wobei das druckempfindliche Silikonhaftmittel mindestens einen Silikonkautschuk und mindestens ein Siloxanharz einschließt, und
wobei das Band eine Durchlässigkeit von sichtbarem Licht von mindestens 90% aufweist.

9. Silikonhaftband nach Anspruch 1 oder System nach Anspruch 8, wobei der Silikonkautschuk mindestens ein Mittel, ausgewählt aus: Polydimethylsiloxan (PDMS) mit mindestens einer Silanolgruppe, Polydimethylsiloxan (PDMS) ohne Silanolgruppen, Polydimethyldiphenylsiloxan (PDMDPS) mit mindestens einer Silanolgruppe, Polydimethyldiphenylsiloxan (PDMDPS) ohne Silanolgruppen, PDMS mit mindestens einem Siloxanharz, PDMDPS, das mindestens ein Siloxanharz enthält, und Kombinationen davon, umfasst.

10. Silikonhaftband nach Anspruch 1 oder System nach Anspruch 8, wobei der Silikonkautschuk ein Gewichtsmittel des Molekulargewichts in einem Bereich von 150.000 bis 2.000.000 aufweist.

11. Silikonhaftband nach Anspruch 1 oder System nach Anspruch 8, wobei das Siloxanharz eine Formel MQ aufweist, wobei M R₃SiO_{1/2} ist, Q quaternäre SiO_{4/2}-Einheiten ist und R -CH₃ ist.

12. Silikonhaftband nach Anspruch 1 oder System nach Anspruch 8, wobei das Siloxanharz ein Gewichtsmittel des Molekulargewichts in einem Bereich von 2.000 bis 50.000 aufweist.

13. Silikonhaftband nach Anspruch 1 oder System nach Anspruch 8, wobei der mindestens eine Silikonkautschuk in einem Bereich von 60% bis 90% basierend auf dem Gesamtgewicht des druckempfindlichen Silikonhaftmittels vorliegt.

14. Silikonhaftband nach Anspruch 1 oder System nach Anspruch 8, wobei das Siloxanharz in einem Bereich von 1% bis 50% basierend auf dem Gesamtgewicht des druckempfindlichen Silikonhaftmittels vorliegt.

15. Silikonhaftband nach Anspruch 1 oder System nach Anspruch 8, wobei das flexible Substrat ausgewählt ist aus der Gruppe, umfassend Polypropylen, Polyethylen, Polyethylenterephthalat und andere Polyester, COCs oder COPs, Polymethylpenten, Nylon, Perfluoralkoxyalkanpolymer und Kombinationen davon.

16. Silikonhaftband nach Anspruch 1 oder System nach Anspruch 8, wobei das druckempfindliche Silikonhaftmittel auf dem flexiblen Substrat in einer Schicht mit einer Dicke in einem Bereich von 10 bis 100 Mikrometer angeordnet ist.

## Revendications

1. Ruban adhésif en silicone comprenant :
un substrat flexible définissant une première face et une seconde face dirigée à l'opposé ;
un adhésif en silicone sensible à la pression, exempt de catalyseur, disposé sur au moins une de la première face et la seconde face du substrat, dans lequel l'adhésif en silicone sensible à la pression inclut au moins une gomme de silicone et au moins une résine de siloxane, et
dans lequel le ruban présente
(i) un cisaillement statique de 5 à 5000 minutes, tel que mesuré conformément au procédé fourni dans la description,
(ii) une adhésion au pelage à 180 degrés supérieure à 8,0 N/25 mm, telle que mesurée conformément au procédé fourni dans la description,
(iii) une force de libération de doublure faible et stable inférieure à 60 g/50,8 mm, telle que mesurée conformément au procédé fourni dans la description, et
(iv) une transmittance à la lumière visible d'au moins 90 %, telle que mesurée conformément au procédé fourni dans la description.

2. Ruban selon la revendication 1, comprenant en outre :
une couche de libération recouvrant au moins partiellement l'adhésif en silicone sensible à la pression.

3. Procédé d'évaluation d'un échantillon liquide, le procédé comprenant :
fournir une plaque de fixation définissant une première face, une seconde face dirigée à l'opposé, et une ouverture s'étendant à travers l'épaisseur de la plaque de fixation entre les première et seconde faces ;
fournir un ruban adhésif en silicone comprenant un substrat flexible et un adhésif en silicone sensible à la pression, exempt de catalyseur, disposé sur le substrat, dans lequel l'adhésif en silicone sensible à la pression inclut au moins une gomme de silicone et au moins une résine de siloxane,
le ruban adhésif en silicone présentant une transmittance à la lumière visible d'au moins 90 % ;
former une cavité définie par l'ouverture s'étendant à travers l'épaisseur de la plaque de fixation en faisant adhérer le ruban adhésif en silicone sur une première face de la plaque de fixation recouvrant l'ouverture et faisant adhérer le ruban adhésif en silicone sur une seconde face de la plaque de fixation recouvrant l'ouverture ;
administrer un échantillon liquide dans la cavité ;
soumettre l'échantillon liquide dans la cavité à au moins une technique d'évaluation analytique.

4. Procédé selon la revendication 3, dans lequel la formation est réalisée en faisant adhérer une section unique de ruban sur les deux faces de la plaque de fixation.

5. Procédé selon la revendication 3, dans lequel la formation est réalisée en faisant adhérer une première section de ruban adhésif en silicone sur la première face de la plaque de fixation et faisant adhérer une seconde section de ruban adhésif en silicone sur la seconde face de la plaque de fixation.

6. Procédé selon la revendication 3, dans lequel la technique d'évaluation analytique est réalisée en utilisant un spectromètre.

7. Procédé selon la revendication 3, dans lequel la technique d'évaluation analytique est réalisée en utilisant un visibilimètre.

8. Système d'évaluation d'un échantillon liquide, le système comprenant :
une plaque de fixation définissant une première face, une seconde face dirigée à l'opposé, et une ouverture s'étendant à travers l'épaisseur de la plaque de fixation entre les première et seconde faces ;
du ruban adhésif en silicone incluant un substrat flexible et un adhésif en silicone sensible à la pression, exempt de catalyseur, disposé sur le substrat, dans lequel l'adhésif en silicone sensible à la pression inclut au moins une gomme de silicone et au moins une résine de siloxane, et
le ruban présentant une transmittance à la lumière visible d'au moins 90 %.

9. Ruban adhésif en silicone selon la revendication 1 ou système selon la revendication 8, dans lequel la gomme de silicone comprend au moins un agent sélectionné parmi : du polydiméthylsiloxane (PDMS) ayant au moins un groupe silanol, du polydiméthylsiloxane (PDMS) avec aucun groupe silanol, du polydiméthyldiphénylsiloxane (PDMDPS) ayant au moins un groupe silanol, du polydiméthyldiphénylsiloxane (PDMDPS) avec aucun groupe silanol, du PDMS ayant au moins une résine de siloxane, du PDMDPS contenant au moins une résine de siloxane, et des combinaisons de ceux-ci.

10. Ruban adhésif en silicone selon la revendication 1 ou système selon la revendication 8, dans lequel la gomme de silicone a un poids moléculaire moyen en poids dans une plage allant de 150 000 à 2 000 000.

11. Ruban adhésif en silicone selon la revendication 1 ou système selon la revendication 8, dans lequel la résine de siloxane a une formule MQ, dans laquelle M est R₃SiO_{1/2}, Q est des unités SiO_{4/2} quaternaires et R est -CH₃-.

12. Ruban adhésif en silicone selon la revendication 1 ou système selon la revendication 8, dans lequel la résine de siloxane a un poids moléculaire moyen en poids dans une plage allant de 2000 à 50 000.

13. Ruban adhésif en silicone selon la revendication 1 ou système selon la revendication 8, dans lequel l'au moins une gomme de silicone est présente au sein d'une plage allant de 60 % à 90 % basée sur le poids total de l'adhésif en silicone sensible à la pression.

14. Ruban adhésif en silicone selon la revendication 1 ou système selon la revendication 8, dans lequel la résine de siloxane est présente au sein d'une plage allant de 1 % à 50 % basée sur le poids total de l'adhésif en silicone sensible à la pression.

15. Ruban adhésif en silicone selon la revendication 1 ou système selon la revendication 8, dans lequel le substrat flexible est sélectionné parmi le groupe comprenant du polypropylène, polyéthylène, polyéthylène téréphtalate et d'autres polyesters, COC ou COP, du polyméthylpentène, nylon, un polymère de perfluoroalcoxyalcane et des combinaisons de ceux-ci.

16. Ruban adhésif en silicone selon la revendication 1 ou système selon la revendication 8, dans lequel l'adhésif en silicone sensible à la pression est disposé sur le substrat flexible en une couche ayant une épaisseur au sein d'une plage allant de 10 à 100 microns.
